# EUROPEAN PATENT APPLICATION

(11) **EP 1 054 189 A1**
(43) Date of publication of application: **22.11.2000**
(21) Application number: 00304090.4
(22) Date of filing: 15.05.2000
(51) Int. Cl.: F16H 27/06

(54) **Driving cam of geneva mechanism**

(30) Priority: 20.05.1999 JP 14044499
(71) Applicant: Joo, Sang Wan, Seoul (KR)
(72) Inventor: Joo, Sang Wan, Seoul (KR)
(74) Representative: Stonehouse, Sidney William

(57) **Abstract**

The present invention relates to a driving cam (1) of a geneva mechanism, more specifically to a driving cam capable of forming a groove for supporting rotating bodies such as balls around the periphery precisely, and of making rotation of the rotating bodies smooth.

The present invention is constructed so that a peripheral groove (22) is formed concentrically with the centre of the driving shaft on a circular arcuate peripheral surface (21) of a part-circular plate core member (20), and rotating bodies (50) disposed in said peripheral groove (22) are held by the rims (31, 41) of top and the bottom covers (30, 40) of the cam.

## Description

### BACKGROUND OF THE INVENTION

### 1. Field of the Invention

The present invention relates to a driving cam of a geneva mechanism. As generally known, a geneva mechanism is constructed as follows. While a circular arcuate convex of a driving wheel and a circular arcuate concave of a driven wheel are coupled and sliding, the driven wheel is detained right at the place without rotating, and when a pin on the driving wheel is inserted into one of the slots of the driven wheel and then pulled out, the driven wheel is rotated to a predetermined degree.

It goes without saying that the transfer loss of energy is decreased, because the circular arcuate convex and the circular arcuate concave are sliding smoothly almost without any resistance.

### 2. Description of the Related Art

In Japanese Utility Model Patent Laid-open No. 1985-64357, an art has been disclosed that the sliding resistance is reduced by disposing rollers successively in the circular arcuate convex.

In the above mentioned prior art, however, it is difficult to process an arrangement of the pins supporting the rollers in a complete round shape, and there is a defect of rather increasing resistance if an irregularity exists in the arrangement of the rollers.

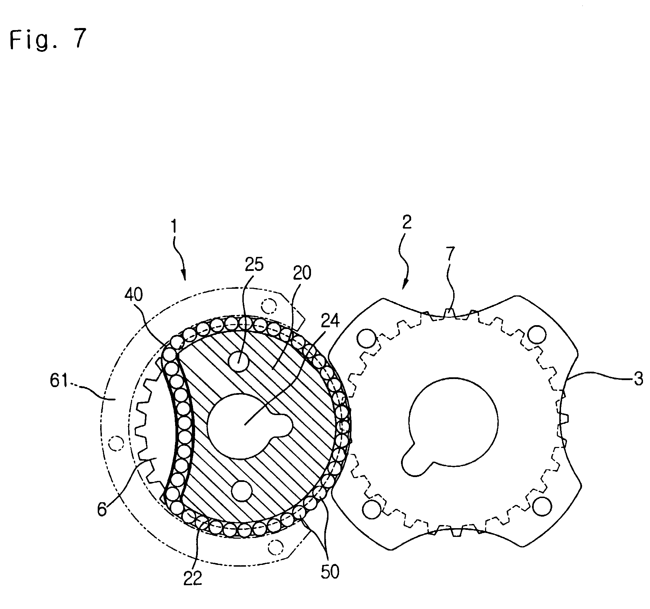

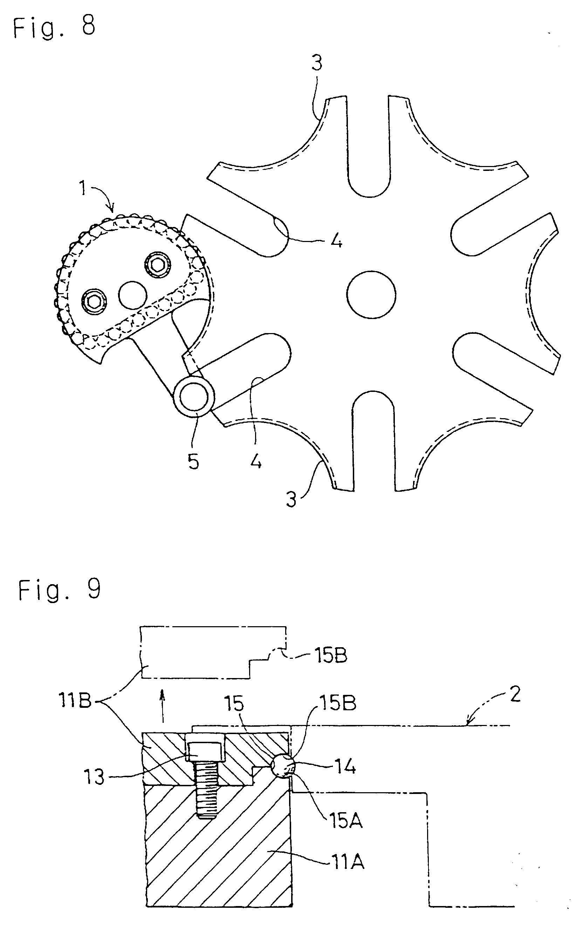

As opposed to the above described Publication, in Japanese Patent No. 2788218, a mechanism holding balls (rotating bodies) inside an annular groove which is formed in a circular arcuate convex of divided wheel (driving rotating body) has been disclosed. However, a detailed structure of holding the balls is that, as shown in Figure 9, after divided grooves 15A, 15B of having sections of about 1/4 of the circular arc are formed in the opposite surfaces of a pair of male and female cam members 11A, 11B, and then an annular groove 15 is formed by coupling a pair of cam members 11A, 11B with bolt 13, the balls 14 are held inside this annular groove 15 so as to be in contact with a circular arcuate concave (refer to Figure 7 of the above described Publication).

However, firstly there are problems that the processing of matching the circular arcs precisely is very difficult when the annular groove 15 is formed by coupling, because the divided grooves 15A, 15B have to be formed individually, and the smooth rotation of the balls 14 cannot be expected because the processing error is increasing. Secondly there are many causes to decrease processing accuracy such as positioning of the bolting hole because the divided grooves 11A, 11B are required to be assembled precisely without being displaced to the radial direction, when the male cam member 11A and female cam member 11B are coupled with bolt 13.

### SUMMARY OF THE INVENTION

Accordingly, an object of the present invention is to provide a driving cam wherein grooves of radial direction which hold rotating bodies such as balls can be formed precisely, and smooth rotating of the rotating bodies can be guaranteed.

To achieve the above object, in the driving cam of the present invention, a peripheral groove is formed concentrically with the driving shaft on a circular arcuate peripheral surface of a part-circular plate core member, and rotating bodies disposed in the peripheral groove are hold by circular arcuate rims formed at the peripheral edge of covers which are attached to the top and the bottom of the core member.

Preferably, with a path of the rotating bodies being formed along the entire periphery, the rollers are cyclically rotated endlessly. The sectional form of the above described peripheral groove may be triangular, quadrangular, trapezoidal, round, oval or the like.

### BRIEF DESCRIPTION OF THE DRAWINGS

Figure 1 is an exploded perspective view showing an example of a driving cam of the present invention.
Figure 2 is an exploded sectional view of Figure 1.
Figure 3 is a partially enlarged sectional view of the driving cam of the present invention.
Figure 4 is a side view showing an example of a core member of a driving cam.
Figure 5 is a side view showing another example of a core member of a driving cam.
Figure 6 is a partial sectional view showing another example of a driving cam of the present invention.
Figure 7 is a plan view showing an example of a driving wheel and a driver wheel.
Figure 8 is a plan view showing another example of a driving wheel and a driver wheel.
Figure 9 is a partial sectional view showing a conventional driving cam.

### DETAILED DESCRIPTION OF THE PREFERRED EMBODIMENT

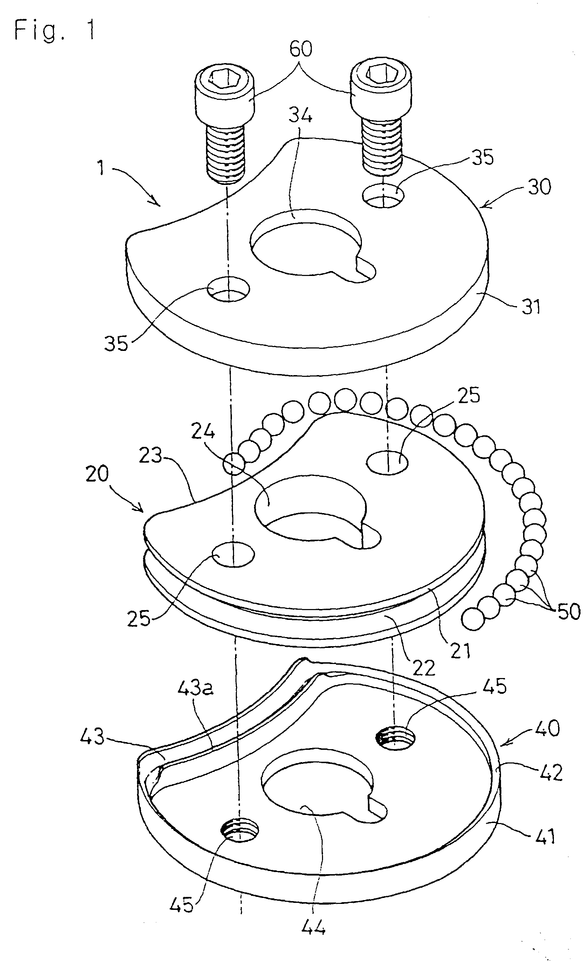

The embodiment of the present invention will be described with reference to Figure 1 through Figure 8.

As shown in Figures 1, 2 and 3, a driving cam 1 of the present invention comprises a core member 20, a top cover 30, a bottom cover 40, rotating bodies 50 and coupling means such as bolts 50 for assembling the above described core member 20, top cover and bottom cover 30, 40, and rotating bodies 50 integrally.

The core member 20 is a flat pan-circular plate as a whole, on a circular arcuate peripheral surface 21 thereof, a peripheral groove 22 is formed concentrically with the driving shaft, and the part-circular portion has a flat surface curved somewhat inwardly. The sectional form of the peripheral groove 22 is preferably triangular as shown in the Figure, but may also be the one which will be mentioned later. Also, a coupling hole 24 for inserting the driving shaft is formed in the centre of the circular arcuate peripheral surface 21, and in the opposite sides of the hole 24 are formed through boles 25, 25. Further, the length of the circular arc of the circular arcuate peripheral surface 21 is set properly according to that of circular arcuate peripheral surface of the driven cam to be coupled with the peripheral surface 21.

The top cover 30 is a part-circular tray member of almost similar shape to that of the core member 20 as a whole, whereon a circular arcuate rim 31 is formed concentrically with the circular arcuate peripheral surface 21 of the core member 20, and a chamfer 32 is formed in the inner end of the rim 31. Preferably, the chamfer has a circular arcuate shape. Also, a groove 33 having a circular arcuate section is formed at the part-circular portion, and both ends of an inside wall 33a of the groove 33 are opened so as to communicate with a peripheral groove 22 of the core member 20. In the drawings, the reference numeral 34 denotes a coupling hole for the driving shaft and 35 through holes of bolts 60.

The bottom cover 40 has the same shape as the top cover 30, and the reference numeral 41 denotes a rim, 42 a chamfer of the rim 41, 43 a groove of circular arcuate section, 43a inside wall of the groove 43, 44 coupling hole for the driving shaft, and 45 bolt holes for screwing the bolts 60.

In case of assembling driving cam 1 with the core member, the top cover 30 and bottom cover 40, first, the core member 20 is mounted on the bottom cover 40 such as the coupling hole 24 and the through holes 25 fit in with the coupling hole 44 and the bolt holes 45. Next, after the balls as rotating bodies 50 are disposed successively in the peripheral groove 22 and groove 43, the top cover is placed, the bolts, 60, 60 are inserted into the through holes 35, 35 and screwed into the bolt holes 45, 45 of the bottom cover 40, completing a fastening.

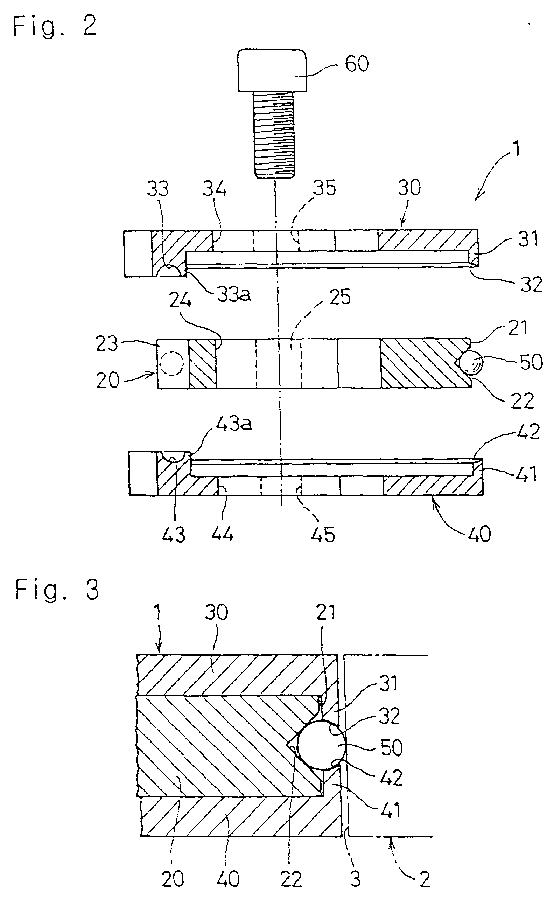

Accordingly, as shown in Figure 3, the rotating bodies 50 inside the peripheral groove 22 are held so as not to fall off due to the rims 31, 41, and a part of the rotating bodies 50 (ball) is projected a little to be in contact with a circular arcuate concave 3 of a driven cam 2. In this case, it is the peripheral groove 22 alone that regulates the positions of balls 50, and the rims 31, 41 of the covers 30, 40 may be only for preventing the balls 50 from falling off. Accordingly, if the peripheral groove 22 is processed precisely to be concentric with the shaft of the core member 20, the balls 50 rotate smoothly along the circular arcuate concave 3. Of course, it is easy to process precisely the single peripheral groove 22 in the single core member 20 as a work.

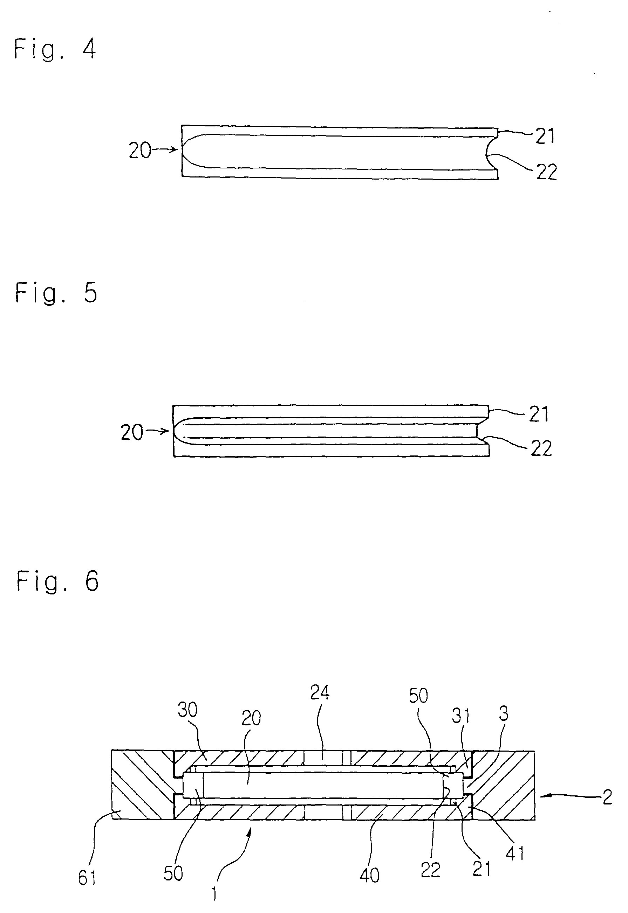

The sectional form of the peripheral groove 22 has a triangular shape in the above embodiment, it may have circular arcuate or oval arcuate one as shown in Figure 4, or trapezoidal one as in Figure 5. Also the peripheral groove 22 may be formed along the entire periphery of the core member 20. In this case, the rims 31, 41 of the covers 30, 40 may be formed along the entire periphery so as to prevent the rotating bodies 50 from falling off. Also, the rotating bodies are not limited to balls, but they may be rollers as shown in Figure 6. In this case, as it is difficult to protrude the rollers outside from the rims 31, 41 of the covers 30, 40, the circular arcuate concave 3 of the driven cam 2 may be made to project into the gap between the ends of the rims 31, 41.

In the embodiments above described, through the rotating bodies 50 have a structure of going round the entire periphery of the driving cam 1, the rotating bodies may only be disposed in the circular arcuate periphery. The driving wheel having the driving cam 1 and the driven wheel 50 driven by the former may be coupled in various ways. For one, a partial gear 6 is disposed on the part-circular portion, and a gear 7 is disposed on the driven cam 2 so as to be engaged with a part of gear 6, as shown in Figure 7, or a geneva gear, as shown in Figure 8, or a star gear (not shown in drawings) may do just as well. In Figure 8, the reference numeral 4 denotes slots, 5 a pin for engaging with the slots 4.

Further, an auxiliary guide 61 may be formed facing a part of the peripheral surface of driving cam 1 in order to decrease friction between rotating bodies, and make smooth the movement of the rotating bodies 50 as well, when the rotating bodies 50 disposed in the peripheral groove of the driving cam 1 rotate on their own axis and revolve along the peripheral groove2. The auxiliary guide 61 is always formed in the normal state regardless of the rotating movement of the driving cam 1, and is able to be brought, along the peripheral groove 22 of the driving cam 1, into rolling contact with the rotating bodies 50 which are not in contact with the driven cam 2 when the driving cam 1 is rotating in either direction while supporting a part thereof by contact, resulting in minimising friction and collision between the rotating bodies 50, thus preventing damage to the rims 31, 41 of the top and bottom covers 30, 40 due to friction and collision force.

The materials of the driving cam 1 may be chosen among steels, ceramics, synthetic resins, or the like. Also, as a fabricating method, besides cutting work, forging, sintering, moulding, or the like may be adopted. Further, as a coupling means of each member, besides bolts, press fitting, adhesives, or the like may be used.

As described above, the present invention is constructed as a peripheral groove is formed on a circular arcuate peripheral surface of a part-circular plate core member, and rotating bodies disposed in the peripheral groove are held by a top and a bottom covers which are attached to the top and the bottom of the core members, so that it is easy to form the peripheral groove concentric with the shaft of the core member precisely, with the result that a smooth rotation of the rotating bodies is possible.

In addition, by forming an auxiliary guide facing a part of the peripheral surface, the rotating bodies are brought into rolling contact, while friction and collision between rotating bodies are minimised, thus preventing damage to the rims of the top and the bottom covers.

## Claims

1. A driving cam (1) of a geneva mechanism, characterised in that a peripheral groove (22) is formed concentrically with the driving shaft on a circular arcuate peripheral surface (21) of a part-circular plate core member (20), rotating bodies (50) disposed in said peripheral groove are held by circular arcuate rims (31, 41) formed at the peripheral edge of covers (30, 40) which are attached to the top and the bottom of said core member.

2. A driving cam (1) of a geneva mechanism according to claim 1, characterised in that a path of the rotating bodies (50) defined by said circular arcuate peripheral groove (22) and said circular arcuate rims (31, 41) is extended up to the part-circular part of said core member (20), and forms the path of the rotating bodies around the entire periphery of said core member.

3. A driving cam (1) of geneva mechanism according to claim 1 or claim 2, characterised in that the sectional form of said peripheral groove (22) is triangular, round, oval, quadrangular, trapezoidal, or the like.

4. A driving cam (1) of a geneva mechanism according to claim 1, wherein an auxiliary guide (61) is formed to support a part of said rotating bodies (50) disposed in said driving cam (1).
